# EUROPÄISCHE PATENTSCHRIFT

(11) **EP 2 151 804 B1**
(45) Veröffentlichungstag und Bekanntmachung des Hinweises auf die Patenterteilung: **08.03.2017**
(21) Anmeldenummer: 08161582.5
(22) Anmeldetag: 31.07.2008
(51) Int. Cl.: G07B 15/00, G07C 5/08, G06Q 30/00

(54) **Automatische Ermittlung eines Emissionswertes für ein Kraftfahrzeug**
Automatic calculation of emission figures for a motor vehicle
Détermination automatique d'une valeur d'émission pour un véhicule automobile

(43) Veröffentlichungstag der Anmeldung: 10.02.2010
(73) Patentinhaber: Arktik GmbH, 20355 Hamburg (DE)
(72) Erfinder: De Vries, Dominic, 72076, Tübingen (DE)
(74) Vertreter: Michalski, Stefan

(56) Entgegenhaltungen:
- EP-A- 1 320 075
- WO-A2-2006/099427
- DE-A1- 3 438 172
- US-A- 5 343 906
- US-A1- 2004 093 264

## Beschreibung

Die Erfindung betrifft ein Verfahren zum automatischen Ermitteln eines Emissionswertes für ein Kraftfahrzeug sowie ein entsprechendes System.

In den vergangenen Jahrzehnten ist ein langsamer Anstieg der Durchschnittstemperatur der erdnahen Atmosphäre beobachtet worden, was gemeinhin als globale Erwärmung bezeichnet wird. Gegenwärtig wird davon ausgegangen, dass eine wesentliche Ursache für die globale Erwärmung im sogenannten Treibhauseffekt liegt. Dieser wird durch das Verbrennen fossiler Brennstoffe und andere Eingriffe in die Umwelt, wie die Abholzung von Waldflächen, verstärkt, da auf diese Weise Kohlendioxid (CO₂) in der Atmosphäre angereichert wird.

Der Beitrag Einzelner zur globalen Erwärmung wird unter anderem durch das Betreiben von Kraftfahrzeugen bestimmt, die fossile Brennstoffe, wie Benzin oder Diesel, verbrennen. Aus dem Stand der Technik ist bekannt, dass Möglichkeiten für Personen bestehen, Abgaben zu leisten, die ihre die globale Erwärmung verstärkenden Handlungen kompensieren sollen. Dazu wird z.B. die Möglichkeit bereitgestellt, die durch das eigene Fahrzeug verursachten Emissionen durch äquivalente Kompensationsleistungen auszugleichen. Dies geschieht bisher beispielsweise, indem beim Betanken eines Kraftfahrzeugs freiwillig pauschal eine gewisse Summe pro getanktem Liter Kraftstoff zusätzlich entrichtet wird. Ferner sind zur freiwilligen CO₂-Kompensation auch sogenannte "CO₂-Rechner" bekannt, mit Hilfe derer z.B. auf der Grundlage einer Jahreskilometerleistung eine Jahresemission von CO₂ berechnet werden kann. Die abgeführten Kompensationsbeträge werden derartigen Projekten zugeführt, die einem CO₂-Anstieg in der Atmosphäre entgegenwirken sollen. Auf dieser Grundlage wird dann eine freiwillige Abgabe zu Kompensation der CO₂-Emissionen ermittelt, die von der betreffenden Person, z.B. über ein Vermittlungsunternehmen, einem entsprechenden Projekt zugeleitet werden kann. Derartige Projekte sind z.B. Aufforstungen von Waldgebieten und der Bau von Windparks oder Solarkraftwerken, die bei der Stromerzeugung verringerte Mengen CO₂ emittieren.

Die EP1320075 betrifft ein Mautsystem, wobei das Kommen und Gehen eines Automobils an den Grenzen eines Mautabschnitts vorgesehenen Toren registriert und eine Maut erhoben wird. Das Automobil ist dabei mit einem Navigationsgerät als mobiles Terminal ausgestattet. Weiter ist eine feste Einheit mit festen Terminals vorgesehen, um mit dem mobilen Terminal zu kommunizieren. Eine Mautsammelstelle dient zur Ermittlung der Maut eines jeden Automobils, wobei die Kraftstoffverbrauchdaten des Automobils vom Navigationssystem an die Mautsammelstelle übertragen werden und eine Maut in Abhängigkeit der Kraftstoffverbrauchsdaten erhoben wird.

Die US5343906 beschreibt ein Emissionsvalidierungssystem bestehend aus einer Vielzahl von Sensoren zur Überwachung der verschiedenen Emissionen und diagnostische Aspekte eines Fahrzeugs. Das Emissionsvalidierungssystem ist bei der Betankung betreibbar und mittels einer Schnittstelle durch die Kraftstoffleitung mit einer CPU verbunden. Die CPU empfängt die gespeicherten Daten und überträgt sie über die Schnittstelle mittels einer elektrischen Leitung zu einer Haupt-CPU in das Emissionsvalidierungssystem. Die Haupt-CPU wertet diese Daten, zusätzlich zur in das Fahrzeug getankten Kraftstoffmenge aus.

In der DE3438172 ist eine Vorrichtung beschrieben, die zur Erfassung und Auswertung der Abgase von abgas-emittierenden Anordnungen, wie beispielsweise Verbrennungsmotoren, Brennöfen und dergleichen dient. Die Vorrichtung besteht aus einer Messvorrichtung mit Sonde, welche die typischen Emissionswerte erfasst und zur Anzeige bringt. Der Messvorrichtung mit Sonde ist ein Datenadapter zugeordnet, welcher die über einen längeren Zeitraum erfassten Daten der typischen Emissionswerte in digitaler Form einem transportablen und aus dem Datenadapter über einen entfernt angeordneten Datenkoppler auslesbar und verarbeitbar sind.

In der US 2004/0093264 wird ein umweltfreundliches Fahrdiagnosesystem beschrieben, welches in der Lage ist, quantitativ den Kraftstoffverbrauch in Bezug auf das jeweilige Ereignis und der umweltbelastenden Emissionen aufgrund des Kraftstoffverbrauchs zu erfassen. Des Weiteren werden ein zugehöriges umweltfreundliches Fahrdiagnoseverfahren und ein zugehöriges Geschäftssystem beschrieben. Ein bordeigenes Gerät erfasst dabei die von einem Fahrzeugsensor erforderlichen Informationen, um den Kraftstoffverbrauch und die Fahrzustände des Fahrzeugs zu erfassen. Die Informationen werden an eine Zentrale über ein Funkkommunikationsnetzwerk übertragen. Auf Grundlage der erfassten Informationen werden der Kraftstoffverbrauch infolge des Fahrverhaltens und die umweltbelastenden Emissionen infolge des Kraftstoffverbrauchs berechnet. Ferner werden auf Grundlage der berechneten Daten, Inhalte, einschließlich Ergebnisse der Diagnose und Ratschläge erstellt, um ein umweltbewusstes Fahren zu fördern. Die Inhalte werden mittels Endgeräten, wie PCs, mobilen Endgeräte, wie Mobiltelefone und dergleichen, bereitgestellt.

Aus der WO 2006/099427 A2 ist ein Fahrzeug-Emissions-Aufzeichnungssystem und die zugehörige Verfahren bekannt. Das Aufzeichnungssystem kann dabei die Emissionseinheiten mindestens eines Fahrzeugs sammeln. Die Emissionseinheiten können dabei eine Menge von einem oder mehreren ausgewählten Schadstoffen repräsentieren oder eine Wärmeenergiemenge oder auch beides. Die Systeme und Verfahren können ferner Emissionsgutschriften durch Vergleichen der gesammelten Emissionseinheiten mit einem Ausgangswert berechnen, um eine Gesamtzahl von Emissions-Punkten über einen ausgewählten Zeitraum zu erhalten und einen Teil der Gesamtemissionsgutschriften an einer ausgewählten Einrichtung bereitzustellen.

Diese aus dem Stand der Technik bekannten Vorgehensweisen zur CO₂-Kompensation durch einzelne Personen sind jedoch nicht befriedigend. Die bestehenden Vorgehensweisen sind ungenau und nicht verursachergerecht bei der Erfassung der Emissionsmengen, d.h. fahreroder fahrzeugtypische Eigenheiten werden nicht berücksichtigt (z.B. nur Eingang der gefahrenen Kilometer). Außerdem sind die Vorgehensweisen aufwendig. Sie erfordern ein aktives Nachhalten der zur Kompensationsberechung notwendigen Bestimmungsgrößen, sowie einen für jeden Vorgang einzeln zu durchlaufenden Kompensationsprozess. Die Ungenauigkeiten sowie die aufwendige Nutzung stellen selbst für engagierte und umweltbewusste Personen Gründe dar, die einer adäquaten Nutzung entgegenstehen.

Damit ist es die Aufgabe der Erfindung, ein derartiges Verfahren sowie ein derartiges System zum automatischen Ermitteln eines Emissionswertes für ein Kraftfahrzeug anzugeben, mit denen eine unkomplizierte und präzise Emissionsberechnung ermöglicht wird.

Die Lösung der Aufgabe erfolgt durch die Gegenstände der unabhängigen Ansprüche Vorteilhafte Ausgestaltungen der Erfindung sind in den Unteransprüchen angegeben.

Erfindungsgemäß ist diese Aufgabe gelöst durch ein Verfahren zum automatischen Ermitteln eines Emissionswertes für ein Kraftfahrzeug, mit folgenden Schritten:
Erfassen einer Kraftstoffart,
Erfassen einer Kraftstoffmenge, die getankt worden ist, mittels eines Kraftstoffmengensensors, der Bestandteil einer Tanksäule einer Tankstelle ist, Erfassen einer Kontenidentifizierung, mittels einer Identifizierungseinrichtung, die Bestandteil der Tankstelle ist,
Zuordnen der erfassten Kontenidentifizierung zu der erfassten Kraftstoffmenge und Übermittlung der erfassten Kontenidentifizierung und der erfassten Kraftstoffmenge an eine außerhalb der Tankstelle angeordnete Ermittlungseinrichtung, die als zentrale Ermittlungseinrichtung für eine Mehrzahl von Tankstellen ausgebildet ist,
Erfassen wenigstens einer Konteninformation eines zu der Kontenidentifizierung zugehörigen Kontos, wobei die Konteninformation einen kontenindividuellen Emissionsmengenschlüssel auf-weist, mit dem für das jeweilige Konto eine Emissionsmenge pro getankter Kraftstoffmenge hinterlegt ist, und
Ermitteln eines Emissionswertes auf der Grundlage der erfassten Kraftstoffart des Kraftstoffs, der erfassten Kraftstoffmenge und der erfassten Konteninformation des zu der Kontenidentifizierung zugehörigen Kontos.

Erfindungsgemäß ist also vorgesehen, dass auf der Grundlage der getankten Kraftstoffmenge und einer kontenindividuellen Information für dieses Konto ein kontenindividueller Emissionswert ermittelt wird. Vorzugsweise handelt es sich bei dem ermittelten Emissionswert um eine Emissionsmenge oder/und eine Emissionsabgabe, insbesondere hinsichtlich ausgestoßenem Kohlendioxid (CO₂). Im Gegensatz zu den aus dem Stand der Technik bekannten Verfahren kann damit einerseits individuell für einen Nutzer, eine Familie oder ein Unternehmen, dem das Konto zugeordnet ist, aber auch für ein einzelnes Kraftfahrzeug oder für eine Kraftfahrzeugflotte auf sehr genaue Weise, nämlich auf der Grundlage der fahrer- oder fahrzeugtypischen Emissionen, ein entsprechender Emissionswert ermittelt werden, also z.B. die Menge der ausgestoßenen Emissionen oder direkt eine Kompensationsabgabe. Damit wird durch das erfindungsgemäße Verfahren eine bedürfnisgerechte Möglichkeit bereitgestellt, Schwächen im herkömmlichen Kompensationsprozess zu eliminieren.

Grundsätzlich kann vorgesehen sein, dass der Emissionswert, also z.B. die Emissionsmenge oder/und die Emissionsabgabe, lediglich ermittelt und ggf. weitergegeben oder weiterverarbeitet wird, z.B. regelmäßig als Information in Form eines "Kontoauszugs" weitergegeben werden. Gemäß einer bevorzugten Weiterbildung der Erfindung ist jedoch vorgesehen, dass eine ermittelte Emissionsabgabe automatisch von einem Geldkonto abgebucht wird. In diesem Zusammenhang ist es ganz besonders bevorzugt, dass die ermittelte Emissionsabgabe zusammen mit der Bezahlung des Kraftstoffs abgebucht wird. Dies ist insbesondere insofern vorteilhaft, als dass dadurch eine individuelle Emissionsabgabe für den Betrieb eines Kraftfahrzeugs erreicht wird, wodurch der Prozess im Vergleich zu bestehenden Vorgehensweisen vereinfacht wird, d.h. es sind keine zusätzlichen Aktivitäten seitens des Nutzers zur Emissionskompensation notwendig.

Gemäß einer bevorzugten Weiterbildung der Erfindung ist ferner vorgesehen, dass der ermittelte Emissionswert dem der Kontenidentifizierung zugehörigen Konto zugerechnet und dort vorzugsweise abgespeichert wird. Dies kann einerseits Grundlage für weitere Zahlungsvorgänge sein, kann andererseits aber auch dazu dienen, einen Überblick über die einem Konto zuzurechnenden Emissionswerte für eine einzelne Person, ein einzelnes Fahrzeug oder aber eine Mehrzahl von Personen und/oder Fahrzeugen zu erzielen.

Grundsätzlich kann nur eine einzige Konteninformation vorgesehen sein, es kann jedoch auch eine Mehrzahl von Konteninformationen vorgesehen sein. Erfindungsgemäß ist vorgesehen, dass die Konteninformation einen kontenindividuellen Emissionsschlüssel, einen kontenindividuellen Kompensationsschlüssel oder/und eine kontenindividuelle Kompensationsart aufweist. Dies bedeutet, dass im Falle eines kontenindividuellen Emissionsmengenschlüssels für das jeweilige Konto eine Emissionsmenge pro getankter bzw. verbrauchter Kraftstoffmenge hinterlegt ist. Diese Emissionsmenge ist vorzugsweise voreingestellt und abhängig von z.B. der Art des Kraftfahrzeugs und/oder der Art des von dem Kraftfahrzeug verwendeten Kraftstoffs. Im Falle eines kontenindividuellen Kompensationsschlüssels ist z.B. das Maß der Kompensation der Emissionen voreingestellt. So kann von dem Nutzer dieses Systems z.B. entschieden werden, einen gewissen Prozentsatz, also z.B. 25, 50, 100 oder 150 % der ermittelten Emissionen zu kompensieren. Schließlich kann zusätzlich oder alternativ dazu eine kontenindividuelle Kompensationsart vorgesehen sein, die z.B. die Art des Projektes angibt, dem die Emissionsabgabe zufließt. Dies kann ein konkretes Projekt sein. Die Bestimmung des Projekts von seiner Art her, z.B. "Wiederaufforstungsprojekt", "Windpark", ... kann jedoch auch ausreichend sein.

Grundsätzlich ist die Erfindung schon dadurch realisierbar, dass die Kraftstoffmenge des getankten bzw. verbrauchten Kraftstoffs erfasst und beim Ermitteln des Emissionswertes berücksichtigt wird. Erfindungsgemäß ist vorgesehen, dass auch die Kraftstoffart des getankten Kraftstoffs erfasst und beim Ermitteln des Emissionswertes berücksichtigt wird. Dies ist insbesondere dann von Interesse, wenn ein Kraftfahrzeug mehrere Arten von Kraftstoff akzeptiert, z.B. Benzin, Super oder Super Plus, denen jeweils eine unterschiedliche Emissionsmenge pro getankter bzw. verbrauchter Kraftstoffmenge zugeordnet ist.

Grundsätzlich kann die Kontenidentifizierung auf unterschiedliche Weise durchgeführt werden. So ist es z.B. möglich, dass der Nutzer des Verfahrens sich mittels einer Tastatur über einen PIN-Code identifiziert. Gemäß einer bevorzugten Weiterbildung der Erfindung ist jedoch vorgesehen, dass die Kontenidentifizierung auf einem Identifizierungsmittel vorgesehen ist. In diesem Zusammenhang ist es insbesondere bevorzugt, dass das Identifizierungsmittel außer der Kontenidentifizierung auch wenigstens eine Konteninformation aufweist. Auf diese Weise wird es möglich, statt einer zentralen Kontendatenbank eine derartige Datenbank für das Verfahren zu verwenden, die in "verteilter" Form vorliegt, also auf einer Mehrzahl von im Umlauf befindlichen Identifizierungsmitteln. Dabei ist es natürlich auch möglich, dass ein Teil von Konteninformationen auf den Identifizierungsmitteln vorgesehen ist, während ein anderer Teil in einer zentralen Datenbank abgelegt ist, die sich z.B. auf einem Datenbankserver befindet. Gleichfalls ist es natürlich auch möglich, Konteninformationen in redundanter Form bereitzustellen, d. h. auf dem Identifizierungsmittel und in einer zentralen Datenbank. Für das Identifizierungsmittel gibt es ebenfalls unterschiedliche Möglichkeiten. Gemäß einer bevorzugten Weiterbildung der Erfindung weist das Identifizierungsmittel z.B. eine gerätelesbare Karte mit einem Magnetstreifen oder einen darin integrierten elektronischen Baustein (z.B. RFID-Chip) auf.

In diesem Zusammenhang sei angemerkt, dass trotz des Einsatzes eines Identifizierungsmittels zusätzlich weitere manuelle Eingaben erfolgen können, nämlich solche manuelle Eingaben, die für den jeweiligen Tankvorgang individuell sind. So ist es z.B. möglich, für einen Tankvorgang bzw. Verbrauchsvorgang individuell anzugeben, für welches Fahrzeug einer Mehrzahl von vorbestimmten Fahrzeugen eines Nutzers die Ermittlung des Emissionswertes erfolgen soll und/oder welche Art des Kompensationsprojektes im konkreten Fall gewünscht ist und/oder wie hoch für den konkreten Tankvorgang bzw. Verbrauchsvorgang der Kompensationsschlüssel sein soll, also welcher Prozentsatz der Emissionen kompensiert werden soll.

Gemäß einer bevorzugten Weiterbildung der Erfindung ist vorgesehen, dass im Fahrzeug der Kraftstoffverbrauch ermittelt wird und beim Ermitteln des Emissionswertes der ermittelte Kraftstoffverbrauch berücksichtigt wird. Dabei kann der Kraftstoffverbrauch tankseitig oder/und abgasseitig erfasst werden. Grundsätzlich ist es möglich, den Kraftstoffverbrauch direkt, also in Echtzeit, bei der Ermittlung des Emissionswertes zu verwenden. Gemäß einer bevorzugten Weiterbildung der Erfindung ist jedoch vorgesehen, dass der Kraftstoffverbrauch auf einer im Fahrzeug vorgesehenen Speichereinrichtung gespeichert wird. Alternativ kann bei der kontinuierlichen Übertragung des Kraftstoffverbrauchs an eine externe Einheit auch eine Speicherung des Kraftstoffverbrauchs in der externen Einheit vorgesehen sein. Bei der Verwendung einer Speichereinrichtung im Kraftfahrzeug ist es ganz besonders bevorzugt, dass der Kraftstoffverbrauch von der Speichereinrichtung an eine externe Ermittlungseinrichtung übertragen wird. Diese Übertragung kann auf verschiedene Weise erfolgen. In diesem Zusammenhang ist es jedoch ganz besonders bevorzugt, dass der Kraftstoffverbrauch drahtlos an die Ermittlungseinrichtung übertragen wird.

Die weiter oben genannte Aufgabe wird erfindungsgemäß ferner gelöst durch ein System zur automatischen Ermittlung eines Emissionswertes für ein Kraftfahrzeug, mit
einem Kraftstoffmengensensor der Bestandteil einer Tanksäule einer Tankstelle ist,
einem Kraftstoffartsensor,
einer Identifizierungseinrichtung, die Bestandteil der Tankstelle ist, zur Erfassung einer Kontenidentifizierung,
einer zu einer Mehrzahl von Konten jeweils wenigstens eine Konteninformation aufweisenden Kontendatenbank und
einer außerhalb der Tankstelle angeordneten Ermittlungseinrichtung, die als zentrale Ermittlungseinrichtung für eine Mehrzahl von Tankstellen ausgebildet ist, wobei
von dem Kraftstoffmengensensor eine getankte Kraftstoffmenge erfasst und der Ermittlungseinrichtung zugeführt wird,
der Kraftstoffartsensor zur Unterscheidung der Kraftstoffart vorgesehen ist, von dem die Art des Kraftstoffs erfasst und der Ermittlungseinrichtung zugeführt wird,
eine von der Identifizierungseinrichtung erfasste Kontenidentifizierung an die Ermittlungseinrichtung übertragen und der erfassten Kraftstoffmenge zugeordnet wird, und
von der Ermittlungseinrichtung auf der Grundlage der erfassten Kraftstoffart des Kraftstoffs, der erfassten Kraftstoffmenge und einer Konteninformation des zu der Kontenidentifizierung zugehörigen Kontos der Emissionswert ermittelt wird, wobei
die Konteninformation einen kontenindividuellen Emissionsmengenschlüssel aufweist, mit dem für das jeweilige Konto eine Emissionsmenge pro getankter bzw. verbrauchter Kraftstoffmenge hinterlegt ist.

Erfindungsgemäß handelt es sich also um ein System mit verschiedenen Komponenten, die einerseits die Erfassung der getankten bzw. verbrauchten Kraftstoffmenge, z.B. direkt an dem Ort der Betankung (z.B. der Tanksäule), erlauben, und es ferner ermöglichen, über eine von einer Identifizierungseinrichtung erfasste Kontenidentifizierung die erfasste Kraftstoffmenge einem Konto zuzuordnen, wobei die eigentliche Ermittlung des Emissionswertes schließlich in der Ermittlungseinrichtung durchgeführt wird, der die dafür erforderlichen Daten zugeführt werden und die Zugriff auf die Kontendatenbank hat, die die für die Ermittlung des Emissionswertes erforderliche Konteninformation aufweist. Dabei kann diese Kontendatenbank, wie weiter oben schon ausgeführt, eine zentrale Datenbank sein; es kann jedoch auch vorgesehen sein, dass die Kontendatenbank durch die Konteninformationen gebildet wird, die auf einer Mehrzahl von in Umlauf befindlichen Identifizierungsmitteln, wie z.B. Magnetstreifenkarten, vorhanden sind.

Bevorzugte Weiterbildungen des erfindungsgemäßen Systems ergeben sich in Analogie zu den weiter oben beschriebenen bevorzugten Weiterbildungen des erfindungsgemäßen Verfahrens. Im Einzelnen gilt Folgendes:

Gemäß einer bevorzugten Weiterbildung des erfindungsgemäßen Systems ist vorgesehen, dass der ermittelte Emissionswert eine Emissionsmenge oder/und eine Emissionsabgabe umfasst. Weiterhin ist es bevorzugt, dass die ermittelte Emissionsabgabe automatisch von einem Geldkonto abgebucht wird. In diesem Zusammenhang ist es ganz besonders bevorzugt, dass die ermittelte Emissionsabgabe zusammen mit der Bezahlung des Kraftstoffs verbucht wird.

Gemäß einer bevorzugten Weiterbildung der Erfindung ist ferner vorgesehen, dass der ermittelte Emissionswert dem der Kontenidentifizierung zugehörigen Konto zugerechnet und dort vorzugsweise abgelegt wird.

Erfindungsgemäß weist die Konteninformation einen kontenindividuellen Emissionsmengenschlüssel, einen kontenindividuelle Kompensationsschlüssel oder/und eine kontenindividuelle Kompensationsart auf. Wie weiter oben schon im Detail ausgeführt, ist dadurch bestimmbar, welche Emissionsmenge pro getankter Kraftstoffmenge angenommen wird, wie hoch das Maß der Kompensation der folgenden Emissionen sein soll (z.B. 25, 50, 100, 150 %) und/oder durch welche Art des Projektes die ermittelte Emissionsabgabe zufließen soll.

Erfindungsgemäß ist ferner ein Kraftstoffartsensor zur Identifizierung der Kraftstoffart vorgesehen, von dem die Art des Kraftstoffs erfasst und der Ermittlungseinrichtung zugeführt wird.

Erfindungsgemäß wird die Kraftstoffart bei der Ermittlung des Emissionswertes berücksichtigt.

Gemäß einer bevorzugten Weiterbildung der Erfindung ist die Kontenidentifizierung auf einem Identifizierungsmittel, vorzugsweise auf einer maschinenlesbaren Chip- oder Magnetkarte (z.B. einem RFID-Chip) vorgesehen. Dabei ist es ferner bevorzugt, dass das Identifizierungsmittel außer der Kontenidentifizierung auch wenigstens eine Konteninformation aufweist. Wie vorhin ausgeführt, kann damit eine "verteilte" Datenbank erzielt werden, nämlich in Form von einer Mehrzahl von in Umlauf befindlichen Identifizierungsmitteln, die jeweils neben der Kontenidentifizierung auch wenigstens eine Konteninformation, wie einen kontenindividuellen Emissionsmengenschlüssel oder/und einen kontenindividuellen Kompensationsschlüssel oder/und eine kontenindividuelle Kompensationsart aufweist.

Weiterhin ist gemäß einer bevorzugten Ausgestaltung der Erfindung im Kraftfahrzeug ein Verbrauchssensor vorgesehen, der den Kraftstoffverbrauch ermittelt, wobei der ermittelte Kraftstoffverbrauch der Ermittlungseinrichtung zugeführt und bei der Ermittlung des Emissionswertes berücksichtigt wird. Dazu wird der Kraftstoffverbrauch vorzugsweise tankseitig oder/und abgasseitig erfasst.

In diesem Zusammenhang ist es ferner bevorzugt, dass der Kraftstoffverbrauch auf einer im Fahrzeug vorgesehenen Speichereinrichtung gespeichert wird. Weiterhin wird der Kraftstoffverbrauch von der Speichereinrichtung vorzugsweise an die Ermittlungseinrichtung übertragen, ganz besonders bevorzugt in drahtloser Form.

Nachfolgend wird die Erfindung unter Bezugnahme auf die Zeichnung im Detail erläutert. In der Zeichnung zeigt
- Fig. 1: schematisch ein System zur automatischen Ermittlung eines Emissionswertes für ein Kraftfahrzeug,
- Fig. 2: schematisch ein System zur automatischen Ermittlung eines Emissionswerts für ein Kraftfahrzeug gemäß einem zweiten bevorzugten Ausführungsbeispiel der Erfindung,
- Fig. 3: schematisch ein System zur automatischen Ermittlung eines Emissionswerts für ein Kraftfahrzeug gemäß einem dritten bevorzugten Ausführungsbeispiel der Erfindung und
- Fig. 4: schematisch ein System zur automatischen Ermittlung eines Emissionswerts für ein Kraftfahrzeug gemäß einem vierten bevorzugten Ausführungsbeispiel der Erfindung.

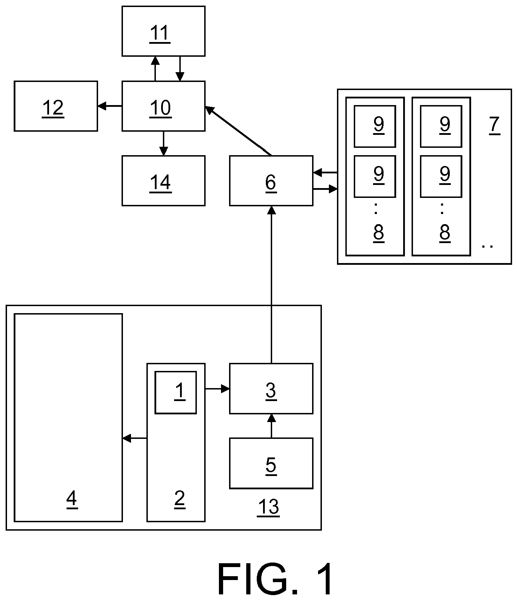

Aus Fig. 1 ist ein System zur automatischen Ermittlung eines Emissionswertes für ein Kraftfahrzeug gemäß einem ersten bevorzugten Ausführungsbeispiel der Erfindung ersichtlich. Dieses System weist einen Kraftstoffmengensensor 1 auf, der Bestandteil einer Zapfsäule 2 einer Tankstelle 13 ist und auch zur Erfassung einer getankten Kraftstoffmenge und zur Bezahlung derselben dient. Ferner umfasst das System gemäß dem vorliegend beschriebenen bevorzugten Ausführungsbeispiel der Erfindung eine Identifizierungseinrichtung 3 zur Erfassung einer Kontenidentifizierung.

Beim Betanken eines Fahrzeugs 4 mittels der Tanksäule 2 wird mit Hilfe des Kraftstoffmengensensors 1 die getankte Kraftstoffmenge erfasst und der Identifizierungseinrichtung 3 zugeführt. Ferner wird mit Hilfe der Identifizierungseinrichtung 3 ein Identifizierungsmittel 5, vorliegend nämlich eine Magnetstreifenkarte, hinsichtlich der auf ihr enthaltenen Kontenidentifizierung ausgelesen. Dazu führt ein Nutzer des Systems diese Karte beim Tanken mit sich und legt sie bei der Bezahlung des Kraftstoffs in der Tankstelle 13 vor, so dass die auf ihr enthaltenen Informationen eingelesen werden können.

Die Kontenidentifizierung und die getankte Kraftstoffmenge werden einander zugeordnet und dann einer Ermittlungseinrichtung 6 zugeführt. Wie Fig. 1 entnehmbar, ist die Ermittlungseinrichtung 6 gemäß dem vorliegend beschriebenen bevorzugten Ausführungsbeispiel außerhalb der Tankstelle 13 vorgesehen, nämlich als zentrale Ermittlungseinrichtung 6 für eine Mehrzahl von Tankstellen 13, vorzugsweise für alle Tankstellen 13 zumindest eines Tankstellenbetreibers. Dies gibt dem Nutzer die Möglichkeit sicherzustellten, dass er beim Betanken seines Kraftfahrzeugs 4 bei diesem Betreiber immer das in Rede stehende System zur automatischen Emissionsabgabe nutzen kann.

Die Ermittlungseinrichtung 6 hat Zugriff auf eine Kontendatenbank 7, die eine Mehrzahl von Konten 8 mit jeweils darin enthaltenen Konteninformationen 9 aufweist. Aufgrund der mit der Identifizierungseinrichtung 3 erfassten Kontenidentifizierung kann von der Ermittlungseinrichtung 6 in der Kontendatenbank 7 das entsprechende Konto 8 ermittelt werden, das Konteninformation 9 zu dem betankten Kraftfahrzeug 4 aufweist. Dem Nutzer des Kraftfahrzeugs 4 zugehörige Konteninformationen sind vorliegend ein kontenindividueller Emissionsmengenschlüssel, also die Angabe, welche spezifische Emissionen das Kraftfahrzeug 4 bei einer bestimmten betankten Kraftstoffmenge abgibt, ein kontenindividueller Kompensationsschlüssel, also die Angabe welcher Anteil des später ermittelten Emissionswert kompensiert werden soll, und schließlich eine kontenindividuelle Kompensationsart, die die Art des Projektes angibt, dem eine zu ermittelnde Emissionsabgabe zufließt.

Zur Ermittlung der Emissionsabgabe wird jedoch zuerst auf der Grundlage der getankten Kraftstoffmenge und des kontenindividuellen Emissionsmengenschlüssels als Emissionswert eine monetäre Emissionsabgabe ermittelt. Diese monetäre Emissionsabgabe wird als Zahlungsinformation an ein Zahlungssystem 10 weitergeleitet, das die Emissionsabgabe von einem dem der Kontenidentifizierung entsprechenden Geldkonto 11 einzieht und an ein Kompensationskonto 12 weiterleitet, wo die Zahlung für ein Kompensationsprojekt verwendet wird. Darüber hinaus dient das Zahlungssystem 10 gemäß dem vorliegend beschriebenen bevorzugten Ausführungsbeispiel der Erfindung auch zum Einzug des Zahlungsbetrags für die getankte Kraftstoffmenge, wozu ebenfalls das Geldkonto 11 verwendet wird, wobei die Weiterleitung dieses Betrags auf ein Tankstellenkonto 14 erfolgt, nämlich der Tankstelle 13 zugeordnet ist, die die Tanksäule 2 betreibt.

Im Ergebnis wird damit ein derartiges System bereitgestellt, das nicht nur eine bequeme Kartenzahlung einer getankten Kraftstoffmenge ermöglicht, sondern gleichzeitig, nämlich unter Verwendung einer entsprechenden Kredit- bzw. Tankkarte als Identifizierungsmittel 5, zu einer individuellen Emissionsabgabe führt.

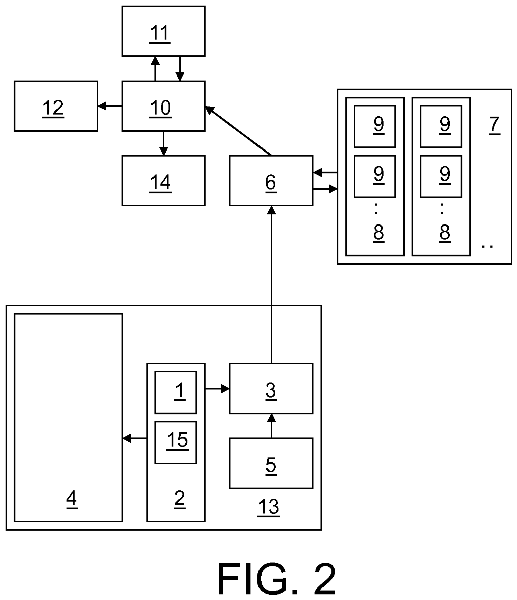

Aus Fig. 2 ist nun schematisch ein System zur automatischen Ermittlung eines Emissionswerts für ein Kraftfahrzeug gemäß einem zweiten bevorzugten Ausführungsbeispiel der Erfindung. Dieses System entspricht im Wesentlichen dem in Fig. 1 dargestellten System, wobei zusätzlich in der Tanksäule ein Kraftstoffartsensor 15 vorgesehen ist. Mit diesem wird die Art des getankten Kraftstoffs ermittelt, also z.B. Normalbenzin, Super oder Superplus, so dass die mit der Art des getankten Kraftstoffs verbundenen spezifischen Emissionen bei der Berechnung des Emissionswertes, insbesondere nämlich der Emissionsabgabe, berücksichtigt werden können.

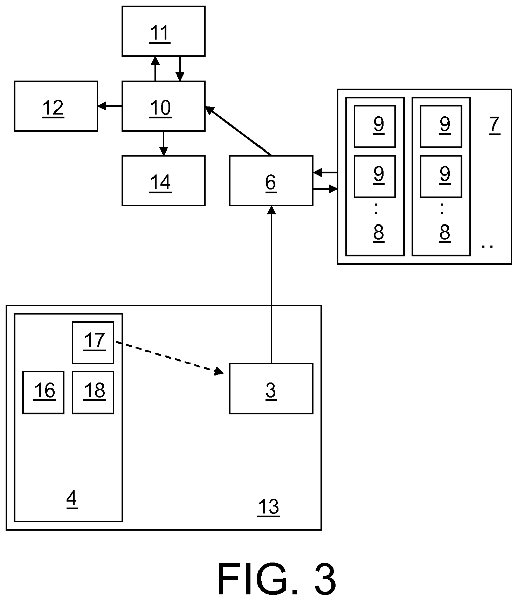

Aus Fig. 3 ist schematisch ein System zur automatischen Ermittlung eines Emissionswerts für ein Kraftfahrzeug gemäß einem dritten bevorzugten Ausführungsbeispiel der Erfindung ersichtlich. Dabei ist in dem Fahrzeug 4 ein Verbrauchssensor 16 vorgesehen, der den Kraftstoffverbrauch ermittelt, und zwar tankseitig. Der auf diese Weise ermittelte Kraftstoffverbrauch wird der Ermittlungseinrichtung 6 zugeführt und dort bei der Ermittlung des Emissionswertes mit berücksichtigt. Dies erfolgt dadurch, dass der Kraftstoffverbrauch auf einer im Fahrzeug vorgesehenen Speichereinrichtung 17 gespeichert wird. Vorliegend ist die Speichereinrichtung 17 entnehmbar, ist nämlich ebenfalls als Karte vorgesehen und kann insbesondere mit als Identifizierungsmittel dienen. Das heißt, dass die als Identifizierungsmittel und Speichereinrichtung 17 vorgesehene Karte im Betrieb des Fahrzeugs 4 in einer entsprechenden Schnittstelle 18 im Fahrzeug 4 eingesetzt ist und dabei zur Abspeicherung des Kraftstoffverbrauchs dient. Beim Bezahlen von getanktem Kraftstoff nach einem Tankvorgang in der Tankstelle 13 wird von der Identifizierungseinrichtung 3 mittels der Speichereinrichtung 17 der Kraftstoffverbrauch erfasst und an die Ermittlungseinrichtung 6 weitergeleitet, wo der Kraftstoffverbrauch dann zur Ermittlung der Emissionsabgabe verwendet wird.

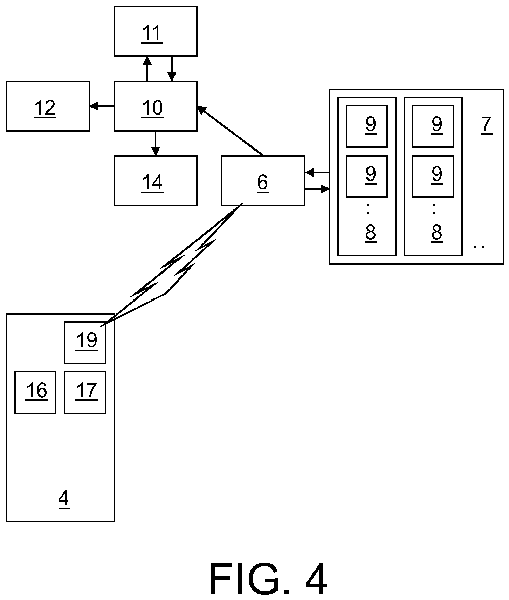

Gemäß dem aus Fig. 4 ersichtlichen vierten bevorzugten Ausführungsbeispiels der Erfindung wird der Kraftstoffverbrauch von der Speichereinrichtung 17 direkt an die Ermittlungseinrichtung 6 übertragen. Dabei ist in dem Fahrzeug 4 ebenfalls ein Verbrauchssensor 16 vorgesehen ist, der den Kraftstoffverbrauch ermittelt, und zwar auch hier tankseitig. Der auf diese Weise ermittelte Kraftstoffverbrauch wird der Ermittlungseinrichtung 6 nun auf anderem Wege zugeführt, als zuvor im Zusammenhang mit dem dritten bevorzugten Ausführungsbeispiel beschrieben. Zuerst wird der Kraftstoffverbrauch auf einer im Fahrzeug 4 vorgesehenen Speichereinrichtung 17 abgespeichert wird. Vorliegend ist die Speichereinrichtung mit einer Sendeeinrichtung 19 verbunden, mit der es möglich ist, Informationen über den Kraftstoffverbrauch drahtlos an die Ermittlungseinrichtung 6 zu senden, wo diese Informationen dann zur Ermittlung der Emissionsabgabe verwendet werden.

## Patentansprüche

1. Verfahren zum automatischen Ermitteln eines Emissionswertes für ein Kraftfahrzeug (4), mit folgenden Schritten:
Erfassen einer Kraftstoffart,
Erfassen einer Kraftstoffmenge, die getankt worden ist, mittels eines Kraftstoffmengensensors (1), der Bestandteil einer Tanksäule (2) einer Tankstelle (13) ist,
Erfassen einer Kontenidentifizierung mittels einer Identifizierungseinrichtung (3), die Bestandteil der Tankstelle (13) ist,
Zuordnen der erfassten Kontenidentifizierung zu der erfassten Kraftstoffmenge und Übermittlung der erfassten Kontenidentifizierung und der erfassten Kraftstoffmenge an eine außerhalb der Tankstelle (13) angeordnete Ermittlungseinrichtung (6), die als zentrale Ermittlungseinrichtung (6) für eine Mehrzahl von Tankstellen (13) ausgebildet ist,
Erfassen wenigstens einer Konteninformation eines zu der Kontenidentifizierung zugehörigen Kontos (8), wobei die Konteninformation einen kontenindividuellen Emissionsmengenschlüssel aufweist, mit dem für das jeweilige Konto eine Emissionsmenge pro getankter Kraftstoffmenge hinterlegt ist, und
Ermitteln eines Emissionswerts auf der Grundlage der erfassten Kraftstoffart des Kraftstoffs, der erfassten Kraftstoffmenge und der erfassten Konteninformation des zu der Kontenidentifizierung zugehörigen Kontos (8).

2. Verfahren nach Anspruch 1, wobei der ermittelte Emissionswert eine Emissionsmenge oder/und eine Emissionsabgabe umfasst.

3. Verfahren nach Anspruch 1 oder 2, wobei die ermittelte Emissionsabgabe automatisch von einem Geldkonto (11) abgebucht wird, vorzugsweise gekoppelt an die Bezahlung der Kraftstoffmenge.

4. Verfahren nach einem der Ansprüche 1 bis 3, wobei die Konteninformation einen kontenindividuellen Kompensationsschlüssel oder/und eine kontenindividuelle Kompensationsart aufweist.

5. Verfahren nach einem der Ansprüche 1 bis 4, wobei im Kraftfahrzeug (4) der Kraftstoffverbrauch ermittelt wird und beim Ermitteln des Emissionswertes berücksichtigt wird.

6. System zur automatischen Ermittlung eines Emissionswertes für ein Kraftfahrzeug (4), mit
einem Kraftstoffmengensensor (1), der Bestandteil einer Tanksäule (2) einer Tankstelle (13) ist,
einem Kraftstoffartsensor,
einer Identifizierungseinrichtung (3), die Bestandteil der Tankstelle (13) ist, zur Erfassung einer Kontenidentifizierung,
einer zu einer Mehrzahl von Konten (8) jeweils wenigstens eine Konteninformation aufweisenden Kontendatenbank (7) und
einer außerhalb der Tankstelle (13) angeordneten Ermittlungseinrichtung (6), die als zentrale Ermittlungseinrichtung (6) für eine Mehrzahl von Tankstellen (13) ausgebildet ist, wobei
von dem Kraftstoffmengensensor (1) eine getankte Kraftstoffmenge erfasst und der Ermittlungseinrichtung (6) zugeführt wird,
der Kraftstoffartsensor zur Unterscheidung der Kraftstoffart (15) vorgesehen ist, von dem die Art des Kraftstoffs erfasst und der Ermittlungseinrichtung (6) zugeführt wird,
eine von der Identifizierungseinrichtung (3) erfasste Kontenidentifizierung an die Ermittlungseinrichtung (6) übertragen und der erfassten Kraftstoffmenge zugeordnet wird, und
von der Ermittlungseinrichtung (6) auf der Grundlage der erfassten Kraftstoffart des Kraftstoffs, der erfassten Kraftstoffmenge und einer Konteninformation des zu der Kontenidentifizierung zugehörigen Kontos (8) der Emissionswert ermittelt wird, wobei
die Konteninformation einen kontenindividuellen Emissionsmengenschlüssel aufweist, mit dem für das jeweilige Konto eine Emissionsmenge pro getankter bzw. verbrauchter Kraftstoffmenge hinterlegt ist.

7. System nach Anspruch 6, wobei der ermittelte Emissionswert eine Emissionsmenge oder/und eine Emissionsabgabe umfasst.

8. System nach Anspruch 7, wobei die ermittelte Emissionsabgabe automatisch von einem Geldkonto abgebucht wird, vorzugsweise zusammen mit der Bezahlung der Kraftstoffmenge.

9. System nach einem der Ansprüche 7 bis 8, wobei die Kontenidentifizierung auf einem Identifizierungsmittel (5), vorzugsweise auf einer maschinenlesbaren Magnetkarte oder auf einen RFID-Chip, vorgesehen ist.

10. System nach Anspruch 9, wobei das Identifizierungsmittel (5) außer der Kontenidentifizierung auch wenigstens eine Konteninformation (9) aufweist.

## Claims

1. A method for automatically determining an emission value for a motor vehicle (4), said method comprising the following steps:
establishing a fuel type,
establishing a fuel quantity that has been filled into a tank, said fuel quantity being established by means of a fuel quantity sensor (1), which is part of a fuel pump (2) of a filling station (13),
establishing an account identifier by means of an identification device (3), which is part of the filling station (13),
associating the established account identifier with the established fuel quantity and transmitting the established account identifier and the established fuel quantity to a determination device (6), which is arranged outside the filling station (13) and which is configured as a central determination device (6) for a plurality of filling stations (13),
establishing at least one piece of account information of an account (8) belonging to the account identifier, wherein the account information comprises an account-specific emission quantity key, with which an emission quantity per fuel quantity filled into the tank is stored for the account in question, and
determining an emission value on the basis of the established fuel type of the fuel, the established fuel quantity, and the established account information of the account (8) belonging to the account identifier.

2. The method according to claim 1, wherein the determined emission value comprises an emission quantity and/or an emissions levy.

3. The method according to claim 1 or 2, wherein the determined emissions levy is automatically debited from a cash account (11), preferably coupled with the payment for the fuel quantity.

4. The method according to any one of claims 1 to 3, wherein the account information comprises an account-specific compensation key and/or an account-specific compensation type.

5. The method according to any one of claims 1 to 4, wherein the fuel consumption is determined in the motor vehicle (4) and is taken into consideration when determining the emission value.

6. A system for automatically determining an emission value for a motor vehicle (4), comprising
a fuel quantity sensor (1), which is part of a fuel pump (2) of a filling station (13),
a fuel type sensor,
an identification device (3), which is part of the fuel pump (13), for establishing an account identifier,
an account database (7), which comprises at least one piece of account information for each of a plurality of accounts (8), and
a determination device (6), which is arranged outside the filling station (13) and which is configured as a central determination device (6) for a plurality of filling stations (13), wherein
the fuel quantity filled into the tank is established by the fuel quantity sensor and is supplied to the determination device (6),
the fuel type sensor is provided in order to distinguish the fuel type (15), on the basis of which the type of fuel is established and is supplied to the determination device (6),
an account identifier established by the identification device (3) is transmitted to the determination device (6) and is associated with the established fuel quantity, and
the emission value is determined by the determination device (6) on the basis of the first fuel type of the fuel, the established fuel quantity, and a piece of account information of the account (8) belonging to the account identifier, wherein
the account information comprises an account-specific emission quantity key, with which an emission quantity per fuel quantity filled into the tank or consumed is stored for the particular account.

7. The system according to claim 6, wherein the established emission value comprises an emission quantity and/or an emissions levy.

8. The system according to claim 7, wherein the established emissions levy is automatically debited from a cash account, preferably together with the payment for the fuel quantity.

9. The system according to either one of claims 7 or 8, wherein the account identifier is provided on an identification means (5), preferably on a machine-readable swipe card or on an RFID chip.

10. The system according to claim 9, wherein the identification means (5), in addition to the account identifier, also comprises at least one piece of account information (9).

## Revendications

1. Procédé de détermination automatique d'une valeur d'émission pour un véhicule automobile (4), avec les étapes suivantes :
détection d'un type de carburant,
détection d'une quantité de carburant qui a été prélevée à la pompe, au moyen d'un capteur de quantité de carburant (1) qui est une composante d'une pompe à carburant (2) d'une station service (13),
détection d'un identifiant de compte au moyen d'un dispositif d'identification (3) qui est une composante de la station service (13),
association de l'identifiant de compte à la quantité de carburant détectée et transmission de l'identifiant de compte détecté et de la quantité de carburant détectée à un moyen de détermination (6) disposé à l'extérieur de la station service (13), qui est conçu sous la forme d'un moyen de détermination (6) centralisé pour une multitude de stations service (13),
détection d'au moins une information concernant le compte d'un compte (8) correspondant à l'identifiant de compte, où l'information concernant le compte présente une clé de quantité émise individuelle pour le compte, avec laquelle une quantité émise par quantité de carburant prélevée à la pompe est comptabilisée pour le compte en question, et
détermination d'une valeur d'émission sur la base du type de carburant détecté du carburant, de la quantité de carburant détectée et de l'information concernant le compte détectée du compte (8) correspondant à l'identifiant de compte.

2. Procédé selon la revendication 1, dans lequel la valeur d'émission déterminée comprend une quantité émise et/ou un dégagement émis.

3. Procédé selon la revendication 1 ou 2, dans lequel le dégagement émis déterminé est automatiquement débité d'un compte de liquidités (11), de préférence couplé avec le paiement de la quantité de carburant.

4. Procédé selon l'une des revendications 1 à 3, dans lequel l'information concernant le compte présente une clé de compensation individuelle pour le compte et/ou un type de compensation individuel pour le compte.

5. Procédé selon l'une des revendications 1 à 4, dans lequel, dans le véhicule automobile (4), la consommation en carburant est déterminée et lors de la détermination, on tient compte de la valeur d'émission.

6. Système pour la détermination automatique d'une valeur d'émission pour un véhicule automobile (4), avec
un capteur de quantité de carburant (1) qui est une composante d'une pompe à carburant (2) d'une station service (13),
un capteur de type de carburant,
un dispositif d'identification (3) qui est une composante de la station service (13), pour la détection d'une identification de compte,
une banque de données de comptes (7) présentant au moins une information concernant le compte respective parmi une multitude de comptes (8), et
un moyen de détermination (6), disposé à l'extérieur de la station service (13), qui est conçu sous la forme d'un moyen de détermination (6) centralisé pour une multitude de stations service (13),
à partir du capteur de quantité de carburant (1), une quantité de carburant prélevée à la pompe est détectée et est transmise au moyen de détermination (6),
le capteur de type de carburant est prévu pour la différentiation du type de carburant (15), par lequel le type de carburant est détecté et est transmis au moyen de détermination (6),
un identifiant de compte détecté par le dispositif d'identification (3) est transmis au moyen de détermination (6) et est associé à la quantité de carburant détectée, et
à partir du moyen de détermination (6), sur la base du type de carburant détecté du carburant, de la quantité de carburant détectée et d'une information concernant le compte du compte (8) correspondant à l'identifiant de compte, la valeur d'émission est calculée, où l'information concernant le compte présente une clé de quantité émise individuelle pour le compte, avec laquelle une quantité émise par quantité de carburant prélevée à la pompe, respectivement consommée, est donnée pour le compte en question.

7. Système selon la revendication 6, dans lequel la valeur d'émission déterminée comprend une quantité émise et/ou un dégagement émis.

8. Système selon la revendication 7, dans lequel le dégagement émis déterminé est automatiquement débité d'un compte de liquidités, de préférence simultanément au paiement de la quantité de carburant.

9. Système selon l'une des revendications 7 à 8, dans lequel l'identifiant de compte est prévu sur un moyen d'identification (5), de préférence sur une carte magnétique lisible par machine ou une puce RFID.

10. Système selon la revendication 9, dans lequel le moyen d'identification (5) présente en plus de l'identifiant de compte, également au moins une information concernant le compte (9).
